# EUROPEAN PATENT APPLICATION

(11) **EP 2 087 988 A1**
(43) Date of publication of application: **12.08.2009**
(21) Application number: 08002113.2
(22) Date of filing: 05.02.2008
(51) Int. Cl.: B29C 63/00, B27D 5/00, B29C 65/74, B29C 65/02

(54) **A method of sealing hollow multi-walled panels and panels thus obtained**

(71) Applicant: MP MASTERPLAST INT LLC, Wilmington DE 19801 (US)
(72) Inventor: Jurcik, Stanislav, 687 07 Tupesy (CZ)
(74) Representative: Gislon, Gabriele

(57) **Abstract**

The open edge(s) of a multi-walled panel made of a thermoplastic resin are sealed by selecting a resin film or tape having a width that is greater than the thickness of said panel edge(s), welding the resin layer to the panel edge(s) to provide a projecting portion of said layer on at least part of at least one side of the said panel, and removing at least part of said projecting portion(s) from the sealed panel.

## Description

The present invention relates to a method of sealing hollow multi-walled panels and to the sealed panels thus obtained.

Hollow multi-walled panels, or hollow sheet structures, are known in the art and are used for a series of different tasks ranging from roofing to shelves and partitioning elements; these panels comprise two planar and parallel sheets interconnected by a plurality of walls that impart to the final hollow structure the required strength and low weight characteristics.

Said hollow sheets are obtained by extrusion of thermoplastic materials and are provided with open-end edges. Preferred materials are polyolefines and polycarbonates.

The openings at the end of the panel are particularly detrimental when the panel is made of a transparent material, such as polycarbonate: powder, dirt and humidity can then reach the interior of the panel to such an extent that eventually the panel will have to be replaced because polluted and, if it is used in a building, no longer transparent.

It is known to make use of a U-section bar to be placed on the end face of a multiple-walled panel as a sealing means. This solution is not appropriate from an aesthetical point of view and requires extra work because of the required gluing steps.

DE-A-2536462 teaches the use of heated welding jaws to severe a panel and seal it at least on one side.

US 4515648 discloses a method of making a gastight multi-walled panel, formed from a synthetic resin, that comprises the steps of heat sealing a layer of resin on the panel edge by joining them under pressure to form a gastight seal. The same document teaches alternative methods wherein the edges of the panel are heated to a thermoplastic condition and the outer walls of said heated panel portion are pressed together and joined to form a gastight seal. In one embodiment the panel is molded in its edge portions using a suitable molding machine in such a way that the two plane outer walls are compressed to form a flangelike border.

FR-A-2689810 discloses a process of sealing the edges of a multi-walled panel in which a sealing bar, i.e. a sealing element, is brought into contact with the edge of the panel to melt it and to shape it in the required sealed shape.

The above methods involving the melting and self sealing of the walls at the edges of the panel provide a panel that is not fit for use without a frame for housing at least the welded part to hide it out of sight. Moreover, the compression welding of different walls of the same portion of the panel entails a deformation of the extruded structure and often results in a poor or irregular sealing because of the stresses to which the panel portions are subjected when deformed by compression to join together the panel portions.

EP0919358 discloses a process for sealing the edges of a multi-walled panel that is substantially identical to that of US 4515648; in EP 0919358 a protective element is positioned between the sealing material and the heating means that provide the heat required for melting the sealing material.

This method, and the corresponding method of US 4515648, solve the stresses problem of the compression welding methods because the resin layer is separately prepared and then heat welded to the panel edge; however, it has been found that the sealing is, again, inaccurate and deficient.

There is therefore the need for an improved method of sealing the edges of multi-walled plastic panels.

The aim of the present invention is to solve the above mentioned problem and to improve the protection of multiple-walled panels against the penetration of water, dust dirt and other pollutants.

Said aim is achieved by means of the present invention that provides a method of sealing the open edge(s) of a multi-walled panel made of a thermoplastic resin by means of a separately prepared thermoplastic resin layer, characterized in comprising the steps of:
selecting a resin layer having a width that is greater than the thickness of said panel edge(s), welding said resin layer to said panel edge(s) to provide a projecting portion of said layer on at least part of at least one side of the said panel, and removing at least part of said projecting portion(s) from the sealed panel.

According to one aspect of the invention, the panel is an undulated or shaped panel and said width of the resin layer is not only greater than the thickness of the panel body and is also at least equal and much preferably greater then the overall thickness of the panel, i.e. greater than the maximum distance (L) between the two furthest levels of the undulated or shaped panel.

Preferably said resin layer is a film or tape having thickness within the range of 200 µm to 2.000 µm, preferably of 250 to 600 µm and most preferably 300 to 400 µm.

According to a further aspect, the width of the tape or film of resin is 20 to 40% greater than the thickness of the panel, if the panel is flat, or of the maximum height (or overall thickness) of the shaped panel, if the panel is undulated or shaped. The maximum height means the distance, vertically measured, between the level of the base of the panel and the level of the uppermost point of a horizontally lying panel.

A further object of the invention is therefore a hollow multi-walled resin panel as obtainable through a process as above discussed. Preferably the panel is characterized in that the thickness of said resin layer is at least 20% lower than the thickness of the external walls of said panel.

It is a further object of the invention a panel wherein at least part of said welded resin layer projecting from the panel is present, i.e. it has not been removed.

It is another object of the invention an apparatus for welding a resin layer to the open edge(s) of hollow multi-walled panels, comprising means for blocking into a set position said panels and welding means, characterized in further comprising means for positioning a resin layer between said panel and said welding means and means for removing at least part of the layer portions projecting from said panel. The means for removing excess layer portions are located with the welding part on the same frame of the apparatus or detached and spaced from it.

In a preferred embodiment, the resin layer is in the form of a film or tape wound up in a reel and the apparatus comprises means, known per se, to bring the tape in front of the panel, to the welding position.

The method according to the present invention provides several advantages.

The use of a resin layer having the claimed width results in a quick and easy sealing of the open edges of the panel.

The sealing is perfect because there is no danger of mispositioning mistakes: even if the panel is mispositioned with respect to the preset welding position, the width of the tape is enough to automatically correct the mistake and prevent parts of the open edge to be not covered by the resin tape.

Moreover, with the invention method it is possible to seal undulated or curved or otherwise shaped panels with the same speed and accuracy that is reached for the flat panels: the tape is large (wide) enough to embrace the panel.

A further advantage is that two or more superimposed panels, vertically spaced from each other could be sealed by a same wide tape; after removal of the excess tape portions final panels are obtained.

These and further advantages and features of the invention will be apparent form the following description and the enclosed illustrative and non limiting drawings, where:
Fig. 1 is a schematic perspective view of a panel and a resin layer according to the invention;
Fig. 2 and 3 are a lateral view of the panel and the layer in two steps of the invention method;
Fig. 4 is a lateral view of the intermediate product of the invention;
Fig. 5 is a schematic view of the final step of the invention method;
Fig. 6 is a frontal view of the intermediate product in a further embodiment of the invention; and
Fig. 7 is a schematic layout of an apparatus according to the invention.

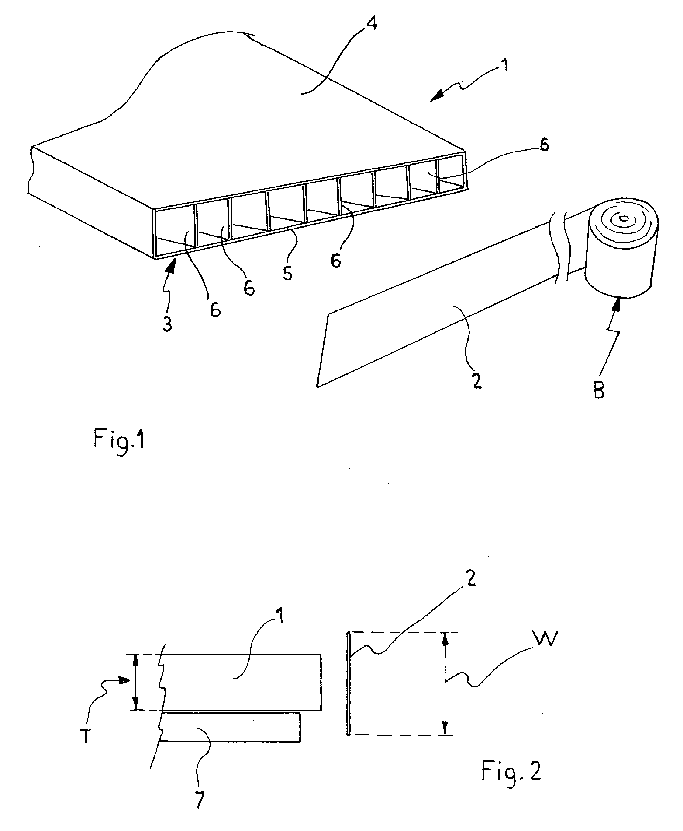

With reference to fig. 1, the invention method provides for welding a resin layer 2 to the edge 3 of a multi-walled hollow panel 1, e.g. made of transparent polycarbonate. The panel has, in a way known per se, two external sheets 4 and 5 connected by a plurality of internal walls 6.

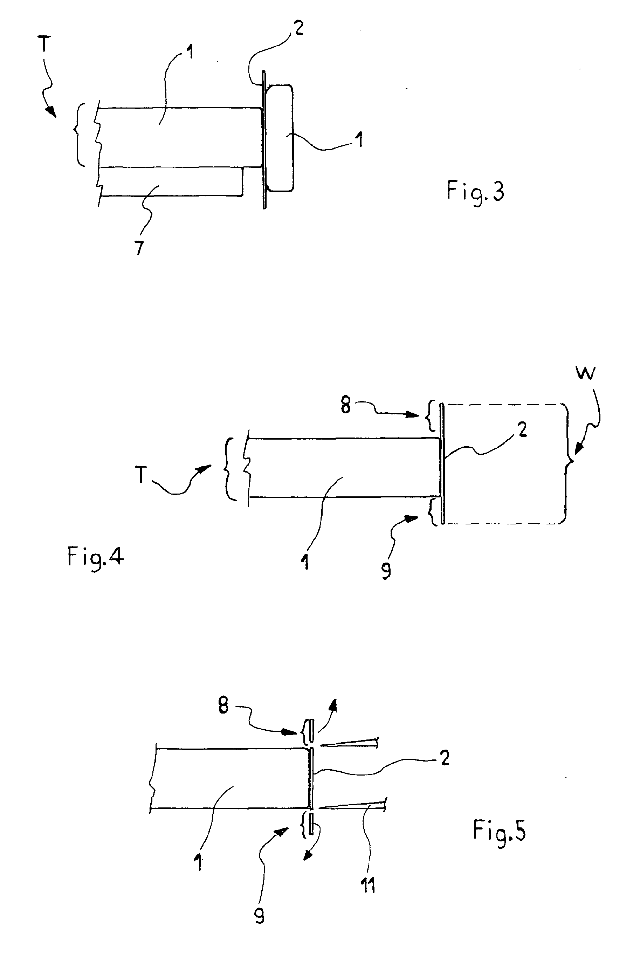

The resin layer 2 is compatible with the resin of which the panel is made and preferably both panel and resin layer are made of the same resin, e.g. polycarbonate. The layer 2 is welded to the edge 3 of panel 1 in a way known per se in the art, e.g. by heat sealing (i.e. thermal welding) by means of a hot welding element or welding blade 16, shown in fig. 3. The blade is provided with means to bring it to a temperature sufficient to weld the film to the panel and is preferably coated in a non-stick i.e. low adhesion material such as PTFE.

According to the invention, the width W of layer 2 (fig. 2) is greater than the thickness of the panel in order to provide (as shown in fig. 4) a sealed panel 1 having the layer 2 extending, i.e. protruding, from at least one side and preferably from both sides 4 and 5 of the panel. In the shown embodiment two protruding, or excess, portions 9 and 10 are present.

The layer 2 has thickness within the range of 200 µm to 2.000 µm, and preferably is a film or tape having a thickness lower than 1000µm, preferably within the range of 250 to 600 µm and most preferably 300 to 400 µm. This range of thickness provides a sealing that is efficient and reliable and, at the same time that result in excess portions 9 and 10 that are easy to remove from the panel 1 e.g. by blades, punch dies or other similar means 11 as schematically shown in fig. 5.

The width W of the tape or film of resin preferably is 20 to 40% greater than the thickness T of the panel, if the panel is flat, or of the maximum height L of the shaped panel, if the panel is undulated or shaped; the maximum height L is here meaning the distance, vertically measured, between the level of the base of the panel and the level of the uppermost point of a horizontally lying panel. If the panel is undulated, L is corresponding to the maximum amplitude of the undulation. L can also be described as the overall thickness of the shaped panel.

The thickness of the tape 2 is usually at least 20% less than the thickness of the external layers 8 and 9 of panel 1.

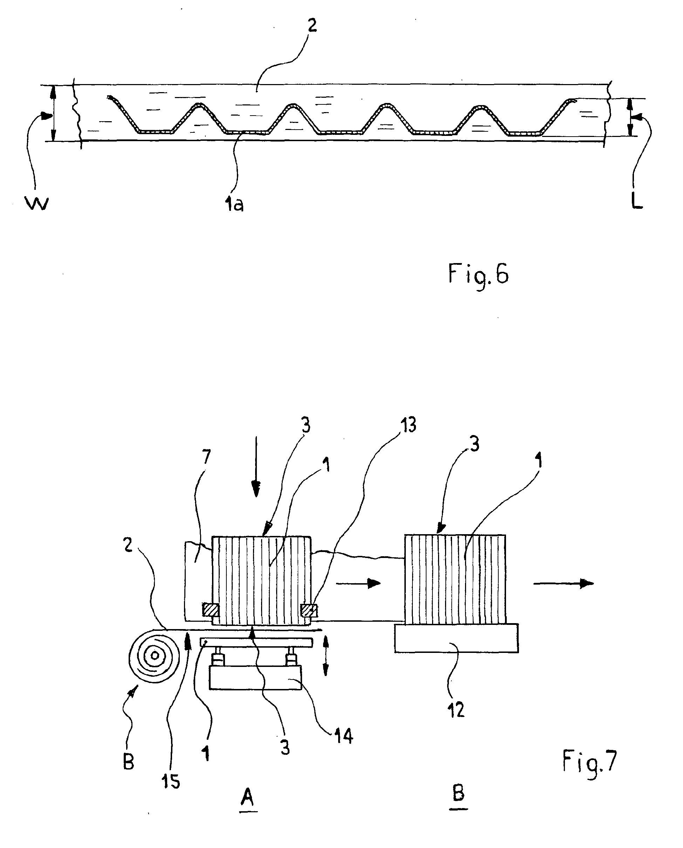

An example of a shaped panel 1a and the corresponding tape 2 is shown in fig. 6. It can be appreciated that the width W of tape 2 is greater than the maximum height L (overall thickness) and many times greater than the thickness T of the body of panel 1 a.

In general, the ratio (W/T) of the resin layer width (W) and the thickness (T) of said panel is within the range of 1.04 to 40.0. If panel 1 is a plane panel the ratio W/T is within the range of 1.20 to 2.0.

In fig. 7 is shown a schematic layout of an apparatus for implementing the method of the invention. As shown, the apparatus comprises a support 7 for holding in position a panel 1 to be sealed with the help of blocking means, such as pistons 13, a source of resin tape or film 2, preferably in the form of a reel, a welding blade 16 that is reciprocated to press the film 2 against the edge 3 of panel 1 in a known way, e.g. by pneumatic or hydraulic means 14, and means 12 to remove the excess portions of the tape 2 from the panel 1 (or 1a). Suitable means 12 are e.g. blades such as rotating or reciprocated blades, cutters or millers, punch dies.

As shown in fig. 7, the method operates as follows. A multi-walled panel 1 previously extruded and severed in the required length, having two open edges 3, is brought to the welding station A of the apparatus according to the invention. Panel 1 is here held in position by means of a support 7 and blocking means 13.

Film or tape 2 is unwound from reel B and positioned in front of the front edge 3; heated blade 8 is then moved towards the edge 3 to press the resin tape 2 against edge 3 and to weld the tape to the panel 1. Cutting means 14, known per se, severe the required portion of tape or film from the remaining of the reel.

The panel leaving the welding station A has the aspect shown in fig. 4, i.e. the film 2 is welded to the edge of the panel and is provided with two protruding portions, or excess film portions, 8 and 9. excess portions 8 and 9 are removed in the cutting station B, where means 12 will remove one or preferably both portions from the panel. According to the invention, a reduced portion of parts 8 and 9 may be left on the panel, mainly in order to obtain an easier removal step. In fact, it may be easier to cut tape or film 2 at a short distance from the panel side than flush with it; in other cases, it may be required to maintain a "ridge" on the sealing part.

The above process will be repeated, if necessary, on the other side of the panel to seal the other open edge.

As previously mentioned, in a variant of the invention two or more superimposed and vertically spaced panels are sealed by heat welding of a single tape wide enough for all of them. The sealed panels are then fed to the cutting station B where they are treated in a way similar to the previously disclosed one to provide single panels sealed and closed.

## Claims

1. A method of sealing the open edge(s) (3) of a multi-walled panel
(1) made of a thermoplastic resin by means of a separately prepared thermoplastic resin layer (2), **characterized in** comprising the steps of:
- selecting a resin layer (2) having a width (W) that is greater than the thickness (T) of said panel edge(s),
- welding said resin layer to said panel edge(s) (3) to provide a projecting portion (8, 9) of said layer (2) on at least part of at least one side of the said panel (1), and
- removing at least part of said projecting portion(s) (8, 9) from the sealed panel.

2. A method according to claim 1, wherein said panel (1) is an shaped panel and said width (W) of the resin layer (2) is greater than the thickness (T) of the panel and is at least equal to the maximum overall thickness (L) of said shaped panel (1a) .

3. A method according to claim 1 or 2, wherein said resin layer (2) is thermally welded to the said panel (1) by a heating element (16) coated with a low adherence material.

4. A method according to any previous claim, wherein said resin layer is a film or tape (2) having thickness within the range of 200 µm to 2000 µm.

5. A method according to any previous claim, wherein the ratio (W/T) of the resin layer width (W) and the thickness (T) of said panel is within the range of 1.04 to 40.0.

6. A method according to claim 5, wherein said panel is a plane panel (1) and said ratio W/T is within the range of 1.20 to 2.0.

7. A hollow multi-walled resin panel (1) as obtainable through a process according to any previous claim, **characterized in that** the thickness of said resin layer (2) is at least 20% lower than the thickness of the external walls (4, 5) of said panel.

8. A panel according to claim 7, wherein at least part (8, 9) of said welded resin layer (2) projecting from the panel (1) edge (3) is present.

9. An apparatus for welding a resin layer (2) to the open edge(s) (3) of hollow multi-walled panels (1), comprising means (7, 13) for blocking into a set position said panels (1), and welding means (16), **characterized in** further comprising means for positioning a resin layer
(2) between said panel (1) and said welding means (16) and means (12) for removing at least part of the resin layer (2) portions (8,9) projecting from said panel (1).

10. An apparatus according to claim 9, wherein said removing means (12) are spaced from said welding means (16).
